# EUROPÄISCHE PATENTSCHRIFT

(11) **EP 1 993 014 B1**
(45) Veröffentlichungstag und Bekanntmachung des Hinweises auf die Patenterteilung: **29.06.2011**
(21) Anmeldenummer: 07009819.9
(22) Anmeldetag: 16.05.2007
(51) Int. Cl.: G05B 19/418

(54) **Verfahren zum Lokalisieren von defekten Hardwarekomponenten und/oder Systemfehlern innerhalb einer Produktionsanlage**
Method for localising defective hardware components and/or system errors in a production facility
Procédé de localisation de composants matériels défectueux et/ou d'erreurs systèmes à l'intérieur d'une installation de production

(43) Veröffentlichungstag der Anmeldung: 19.11.2008
(73) Patentinhaber: SIEMENS AKTIENGESELLSCHAFT, 80333 München (DE)
(72) Erfinder: Meilland, Gérald, 76187 Karlsruhe (DE)

(56) Entgegenhaltungen:
- EP-A- 1 672 452
- US-B1- 6 330 482

## Beschreibung

Die Erfindung betrifft ein Verfahren zum Lokalisieren von defekten Hardwarekomponenten und/oder Systemfehlern innerhalb einer mehrere Hardwarekomponenten aufweisenden Produktionsanlage, wobei die Produktionsanlage mittels einer HMI-Software visualisiert und/oder gesteuert wird und wobei im Fall von Fehlermeldungen aufgrund von defekten Hardwarekomponenten oder bei Systemfehlern eine Lokalisierung der betroffenen Hardwarekomponente und/oder Gruppe von Hardwarekomponenten innerhalb der Produktionsanlage ermöglicht wird, gemäß dem Oberbegriff des Anspruchs 1.

Es ist bekannt, dass Produktionsanlagen mit Hilfe von Automatisierungssoftware projektiert werden. Dabei werden die einzelnen Hardwarekomponenten der Produktionsanlage erfasst und teilweise automatisch und teilweise durch Anwendereingaben die erforderlichen Informationen eingegeben. Zu diesen Informationen zählen insbesondere die Adressen der Hardwarekomponenten innerhalb von Baugruppenträgern und die Adressen der Hardwarekomponenten innerhalb eines Netzwerks, die Bestellbezeichnung der Hardwarekomponenten (MLFB). Weiterhin gehört zu jeder Hardwarekomponente ein Bedienmittelkennzeichen (BMKZ), welches aus frei definierbaren Teilen besteht, wie insbesondere Anlagekennzeichen (AKZ), Ortskennzeichen (OKZ) und Art/Zählnummer/Funktion (AZF). Das Bedienmittelkennzeichen wird vom jeweiligen Anwender definiert.

Zur Projektierung derartiger Anlagen kommt beispielsweise die Automatisierungssoftware STEP 7/HW-Konfig der Firma Siemens zum Einsatz.

Diese Software erlaubt eine Vorgabe hinsichtlich des Umgangs mit Systemfehlern, insbesondere hinsichtlich des Umgangs mit Meldungen (Alarmen), die auf einem Anzeigegerät (beispielsweise mittels eines HMI - Human Machine Interface) angezeigt werden sollen.

Als geeignetes HMI-System kann beispielsweise die Software WinCC der Firma Siemens zum Einsatz kommen, die auch zur Steuerung von Produktionsanlagen über eine SPS (beispielsweise Siemens SIMATIC) geeignet ist.

Der Anwender projektiert mittels der Automatisierungssoftware die Behandlung von Systemfehlern und dabei insbesondere die Meldungen (Alarme), die mittels des HMI angezeigt werden sollen. Ferner projektiert der Anwender mittels des HMI-Systems den Standort der Produktionsanlage mit Gebäuden, Räumen und anderen Details.

Wenn ein Systemfehler auftritt, wird durch die Automatisierungssoftware ein Alarm an das HMI-System gesendet. Dort wird dem Anwender die zuvor festgelegte Information angezeigt, beispielsweise der Name der Komponente. Eine Lokalisierung des Systemfehlers hinsichtlich des Standorts der Komponente erfolgt jedoch nicht.

Weiterhin ist aus der US 6,330,482 B1 ein Kommunikationssystem bekannt, bei dem ein Handterminal drahtlos mit Informationen versorgt wird. Zu diesen Informationen gehören auch Daten über Störungen an Maschinen innerhalb eines Fabriksystems. Eine solche Störung kann an das Handterminal übermittelt werden, sodass Servicepersonal mit Hilfe des Handterminals den Ort der Störung ermitteln kann. Als Ergebnis kann eine Karte des Fabriksystems übermittelt werden, in der die ungefähre Lage der Störung angedeutet ist. Hinsichtlich der technischen Umsetzung enthält diese Entgegenhaltung keinerlei Details.

Weiterhin ist aus der EP 1 672 452 A2 ein System zur Fernwartung bekannt. Innerhalb einer Fabrik sind die einzelnen Anlagen mit einem Leitrechner verbunden, der wiederum über das Internet mit einem Hostrechner eines Anbieters verbunden ist. Eine eventuelle Störung der Anlagen in der Fabrik wird durch den Hostrechner erkannt und an den Anbieter übermittelt, der wiederum Gegenmaßnahmen zur Behebung der Störung übermittelt.

Hiervon ausgehend liegt der Erfindung die Aufgabe zu Grunde, bekannte Verfahren der eingangs genannten Art weiterzuentwickeln.

Zur Lösung dieser Aufgabe weist ein erfindungsgemäßes Verfahren die Merkmale des Anspruchs 1 auf. Bevorzugte Weiterbildungen der Erfindung ergeben sich aus den Unteransprüchen und der Beschreibung im Übrigen.

Gemäß Anspruch 1 ist die Erfindung durch folgende Merkmale gekennzeichnet:
a) die Produktionsanlage und deren einzelne Hardwarekomponenten werden mittels einer Automatisierungssoftware verwaltet und/oder konfiguriert,
b) Identifikationsdaten der Hardwarekomponenten und/oder Gruppen von Hardwarekomponenten werden durch die Automatisierungssoftware erfasst,
c) den einzelnen Hardwarekomponenten und/oder Gruppen von Hardwarekomponenten werden mittels der Automatisierungssoftware und/oder der HMI-Software anhand der Identifikationsdaten Informationen zum Standort zugeordnet, um eine Lokalisierung der betroffenen Hardwarekomponente und/oder Gruppe von Hardwarekomponenten innerhalb der Produktionsanlage zu ermöglichen,
d) bei übergeordneten Hardwarekomponenten wird sowohl innerhalb der Automatisierungssoftware eine Referenz auf ein Control der HMI-Software als auch innerhalb der HMI-Software eine Referenz auf die Hardwarekomponente innerhalb der Automatisierungssoftware gespeichert.

Diese Lösung weist den Vorteil auf, dass es für den Anwender deutlich einfacher ist, die vom Systemfehler betroffene Hardwarekomponente und/oder Gruppe von Hardwarekomponenten innerhalb der Produktionsanlage zu erkennen.

Vorzugsweise ist vorgesehen, dass der Standort der betroffenen Hardwarekomponente und/oder Gruppe von Hardwarekomponenten innerhalb der Produktionsanlage mittels des HMI-Programms angezeigt wird.

Die Erfassung der Identifikationsdaten kann beispielsweise durch Auslesen von I&M Daten der Hardwarekomponenten durch die Automatisierungssoftware erfolgen, wobei die Automatisierungssoftware vorzugsweise die Seriennummern aller Hardwarekomponenten der Produktionsanlage ausliest und zusammen mit den übrigen Daten der Hardwarekomponenten (Bestellbezeichnung (MLFB), Bedienmittelkennzeichen (BMKZ), Anlagekennzeichen (AKZ), Ortskennzeichen (OKZ) und Art/Zählnummer/Funktion (AZF)) speichert.

In einer bevorzugten Ausführungsform der Erfindung ist vorgesehen, dass es sich bei den Identifikationsdaten der Hardwarekomponenten um eindeutige Seriennummern derselben handelt.

Gemäß einer bevorzugten Weiterbildung der Erfindung ist vorgesehen, dass die Zuordnung von Hardwarekomponenten zu einem Standort durch Verknüpfung einer Hardwarekomponente oder einer Gruppe von Hardwarekomponenten in der Automatisierungssoftware mit einem entsprechenden Control in der HMI-Software erfolgt.

Vorzugsweise ist vorgesehen, dass bei der Zuordnung von Hardwarekomponenten zu einem Standort zwischen wenigstens zwei Arten von Hardwarekomponenten unterschieden wird.

Zum einen kann es Hardwarekomponenten geben, die einem Container zugerechnet werden können, also beispielsweise ein Modul zu seinem Baugruppenträger. In die gleiche Kategorie fallen auch Hardwarekomponenten, die mit einer weiteren Hardwarekomponente verbunden sind, also beispielsweise ein Kabel zu seinem Modul.

Ferner gibt es so genannte übergeordnete Hardwarekomponenten, die keinem Container zugeordnet werden können, wie beispielsweise Baugruppenträger, ProfiBus-Slaves und PNIO-Stationen.

Da die erste Art von Hardwarekomponenten physikalisch am selben Ort wie deren Container angeordnet sind, kann erfindungsgemäß vorgesehen sein, dass bei Hardwarekomponenten, die zu einer Gruppe von Hardwarekomponenten an einem gleichen Standort gehören, die Zuweisung des Standorts der Gruppe für alle der Gruppe zugehörigen Hardwarekomponenten übernommen wird. Dies kann auch automatisch erfolgen.

Auf der anderen Seite wird für die so genannten übergeordneten Hardwarekomponenten sowohl innerhalb der Automatisierungssoftware eine Referenz auf ein entsprechendes Control der HMI-Software als auch innerhalb der HMI-Software eine Referenz auf die Hardwarekomponente innerhalb der Automatisierungssoftware gespeichert.

Die Zuordnung in STEP7 kann als Referenz zum entsprechenden Control innerhalb des WinCC-Bildes erfolgen, nämlich als Eigenschaft der Hardwarekomponente. Umgekehrt kann in WinCC eine Referenz zur Hardwarekomponente als Attribut des entsprechenden Controls gespeichert werden.

Die Zuordnung einer Hardwarekomponente zu einem Ort kann sowohl von Seiten der Automatisierungssoftware als auch von Seiten der HMI-Software möglich sein. Hierzu sollten beide Programme entsprechende Funktionen anbieten. Vorzugsweise reicht die Auswahl eines Controls innerhalb der Automatisierungssoftware oder die Auswahl einer Hardwarekomponente innerhalb der HMI-Software aus, um die Zuordnung festzulegen. Nach Auswahl einer übergeordneten Hardwarekomponente in der Automatisierungssoftware kann die benötigte Funktion eine Liste der projektierten Controls in der HMI-Software anbieten, aus denen der Anwender das entsprechende Control auswählt. Weiterhin ist es möglich, dass nach Auswahl eines Controls in der HMI-Software die Liste der übergeordneten Hardwarekomponenten zur Auswahl angeboten werden kann. Nach der Zuordnung können alle projektierten Controls in der HMI-Software über ihre Seriennummer gespeichert werden.

Eine weitere Besonderheit kann darin bestehen, dass bei Austausch einer Hardwarekomponente den bisherigen Identifikationsdaten die neuen Identifikationsdaten der neuen Hardwarekomponente zugeordnet werden, derart, dass bei Austausch der Hardwarekomponente die Zuordnung der neuen Hardwarekomponente zum Standort innerhalb der Produktionsanlage erhalten bleibt. Diese Funktion kann automatisch ablaufen, da das Entfernen bzw. Hinzufügen der Hardwarekomponenten durch die Systemdiagnose erkannt wird.

Bei der erfindungsgemäßen Lösung wird bei einem Systemfehler ein Alarm an die HMI-Software gesendet. Da die Systemdiagnose eine Zuordnung der aktuellen Seriennummer zur ursprünglichen Seriennummer hat, muss nur noch die ursprünglich projektierte Seriennummer an die HMI-Software übergeben werden, um eine Zuordnung des Alarms zum entsprechenden Control und somit zum Standort innerhalb der Produktionsanlage zu ermöglichen.

Zusammenfassend bestehen die Vorteile der Erfindung darin, dass der Anwender die in der HMI-Software gespeicherten Anlagenbilder wesentlich leichter nutzen kann, um den Ort eines Systemfehlers zu lokalisieren. Zudem ist teilweise eine automatisierte Zuordnung des Standorts möglich. Der Tausch einer Komponente führt nicht zum Verlust der Verbindung zwischen der Hardwarekomponente und dem Anlagenbild. Ein weiterer Vorteil besteht in der dadurch auf einfache Weise gegebenen Zuordnung zwischen einem Diagnoseviewer (automatisch erstellte topologische Sicht des Projekts), den dort dargestellten Systemfehlern und der Anlagensicht in der HMI-Software.

## Patentansprüche

1. Verfahren zum Lokalisieren von defekten Hardwarekomponenten und/oder Systemfehlern innerhalb einer mehrere Hardwarekomponenten aufweisenden Produktionsanlage, wobei die Produktionsanlage mittels einer HMI-Software visualisiert und/oder gesteuert wird und wobei im Fall von Fehlermeldungen aufgrund von defekten Hardwarekomponenten oder bei Systemfehlern eine Lokalisierung der betroffenen Hardwarekomponente und/oder Gruppe von Hardwarekomponenten innerhalb der Produktionsanlage ermöglicht wird, **gekennzeichnet durch** folgende Merkmale:
a) die Produktionsanlage und deren einzelne Hardwarekomponenten werden mittels einer Automatisierungssoftware verwaltet und/oder konfiguriert,
b) Identifikationsdaten der Hardwarekomponenten und/oder Gruppen von Hardwarekomponenten werden **durch** die Automatisierungssoftware erfasst,
c) den einzelnen Hardwarekomponenten und/oder Gruppen von Hardwarekomponenten werden mittels der Automatisierungssoftware und/oder der HMI-Software anhand der Identifikationsdaten Informationen zum Standort zugeordnet, um eine Lokalisierung der betroffenen Hardwarekomponente und/oder Gruppe von Hardwarekomponenten innerhalb der Produktionsanlage zu ermöglichen,
d) bei übergeordneten Hardwarekomponenten wird sowohl innerhalb der Automatisierungssoftware eine Referenz auf ein Control der HMI-Software als auch innerhalb der HMI-Software eine Referenz auf die Hardwarekomponente innerhalb der Automatisierungssoftware gespeichert.

2. Verfahren nach Anspruch 1, **dadurch gekennzeichnet, dass** der Standort der betroffenen Hardwarekomponente und/oder Gruppe von Hardwarekomponenten innerhalb der Produktionsanlage mittels des HMI-Programms angezeigt wird.

3. Verfahren nach Anspruch 1 oder 2, **dadurch gekennzeichnet, dass** es sich bei den Identifikationsdaten der Hardwarekomponenten um eindeutige Seriennummern derselben handelt.

4. Verfahren nach einem der vorhergehenden Ansprüche, **dadurch gekennzeichnet, dass** die Zuordnung von Hardwarekomponenten zu einem Standort durch Verknüpfung einer Hardwarekomponente oder einer Gruppe von Hardwarekomponenten in der Automatisierungssoftware mit einem entsprechenden Control in der HMI-Software erfolgt.

5. Verfahren nach einem der vorhergehenden Ansprüche, **dadurch gekennzeichnet, dass** bei Hardwarekomponenten, die zu einer Gruppe von Hardwarekomponenten an einem gleichen Standort gehören, die Zuweisung des Standorts der Gruppe für alle der Gruppe zugehörigen Hardwarekomponenten übernommen wird.

6. Verfahren nach einem der vorhergehenden Ansprüche, **dadurch gekennzeichnet, dass** bei einer Gruppe von Hardwarekomponenten die Zuweisung der Standorte der einzelnen Hardwarekomponenten automatisch nach Zuweisung des Standorts der Gruppe erfolgt.

7. Verfahren nach einem der vorhergehenden Ansprüche, **dadurch gekennzeichnet, dass** bei Austausch einer Hardwarekomponente den bisherigen Identifikationsdaten die neuen Identifikationsdaten der neuen Hardwarekomponente zugeordnet werden, derart, dass bei Austausch der Hardwarekomponente die Zuordnung derselben zum Standort innerhalb der Produktionsanlage erhalten bleibt.

## Claims

1. Method for localising faulty hardware components and/or system errors within a production plant comprising several hardware components, wherein the production plant is visualised and/or controlled by means of HMI software and wherein in the event of error messages as a result of faulty hardware components or in the event of system errors, a localisation of the affected hardware component and/or group of hardware components is enabled within the production plant, **characterised by** the following features:
a) the production plant and its individual hardware components are managed and/or configured by means of automation software,
b) identification data of the hardware components and/or groups of hardware components is detected by the automation software,
c) information relating to the site is assigned to the individual hardware components and/or groups of hardware components by means of the automation software and/or HMI software on the basis of identification data, to enable localisation of the affected hardware component and/or group of hardware components within the production plant,
d) in the case of superordinate hardware components not only is a reference to a control of the HMI software stored within the automation software but a reference to the hardware component within the automation software is also stored within the HMI software.

2. Method according to claim 1, **characterised in that** the site of the affected hardware component and/or group of hardware components within the production plant is indicated by means of the HMI program.

3. Method according to claim 1 or 2, **characterised in that** the identification data of the hardware components is unambiguous serial numbers of the same.

4. Method according to one of the preceding claims, **characterised in that** the assignment of hardware components to a site is carried out by linking a hardware component or a group of hardware components in the automation software to a corresponding control in the HMI software.

5. Method according to one of the preceding claims, **characterised in that** with hardware components, which belong to a group of hardware components at the same site, the allocation of the site to the group is adopted for all hardware components associated with the group.

6. Method according to one of the preceding claims, **characterised in that** with a group of hardware components, the allocation of the sites to the individual hardware components is automatically carried out following allocation of the site to the group.

7. Method according to one of the preceding claims, **characterised in that** in the event of an exchange of a hardware component, the new identification data of the new hardware component is assigned to the previous identification data such that in the event of an exchange of the hardware component, the assignment of the same to the site within the production plant is retained.

## Revendications

1. Procédé de localisation de composants matériels défectueux et/ou d'erreurs de système à l'intérieur d'une installation de production ayant plusieurs composants matériels, l'installation de production étant visualisée et/ou commandée au moyen d'un logiciel HMI et dans lequel, dans le cas de messages d'erreur, en raison de composants matériels défectueux ou d'erreurs de système, une localisation des composants matériels concernés et/ou de groupes de composants matériels de l'installation de production est rendue possible, **caractérisé par** les caractéristiques suivantes :
a) l'installation de production et ses composants matériels individuels sont gérés et/ou configurés au moyen d'un logiciel d'automatisation,
b) des données d'identification des composants matériels et/ou de groupes de composants matériels sont détectés par le logiciel d'automatisation,
c) aux composants matériels et/ou groupes de composants individuels sont affectés, au moyen du logiciel d'automatisation et/ou du logiciel HMI à l'aide de données d'identification, des informations sur l'emplacement pour rendre possible une localisation des composants matériels et/ou des groupes de composants matériels dans l'installation de production,
d) pour des composants matériels supérieurs hiérarchiquement est mémorisé tant à l'intérieur du logiciel d'automatisation une référence à un contrôle du logiciel HMI qu'également à l'intérieur du logiciel HMI une référence aux composants matériels à l'intérieur du logiciel d'automatisation.

2. Procédé suivant la revendication 1, **caractérisé en ce que** l'emplacement des composants logiciels et/ou des groupes de composants logiciel concernés à l'intérieur de l'installation de production est indiqué au moyen du programme HMI.

3. Procédé suivant la revendication 1 ou 2, **caractérisé en ce que** les données d'identification des composants matériels sont des numéros de série univoques de ceux-ci.

4. Procédé suivant l'une des revendications précédentes, **caractérisé en ce que** l'affectation de composants matériels à un emplacement s'effectue dans le logiciel HMI par combinaison d'un composant matériel ou d'un groupe de composants matériels dans le logiciel d'automatisation à une commande correspondante.

5. Procédé suivant l'une des revendications précédentes, **caractérisé en ce que**, pour des composants matériels qui appartiennent à un groupe de composants matériels en un même emplacement, l'affectation de l'emplacement du groupe est pris en charge pour tous les composants matériels appartenant au groupe.

6. Procédé suivant l'une des revendications précédentes, **caractérisé en ce que**, pour un groupe de composants matériels, l'affectation des emplacements des composants matériels individuels s'effectuent automatiquement après l'affectation de l'emplacement du groupe.

7. Procédé suivant l'une des revendications précédentes, **caractérisé en ce que**, lors du remplacement d'un composant matériel, il est affecté aux données d'identification valables jusqu'ici les nouvelles données d'identification du nouveau composant matériel de manière à ce que, lors du remplacement du composant matériel, l'affectation de celui-ci à l'emplacement à l'intérieur de l'installation de production reste conservée.
